(19)

Europäisches
Patentamt
European
Patent Office
Office européen
des brevets

(11) **EP 2 555 504 A1**

(12) **EUROPEAN PATENT APPLICATION**

(43) Date of publication:
**06.02.2013 Bulletin 2013/06**

(51) Int Cl.:
***H04N 1/60*** *(2006.01)*

(21) Application number: **11306007.3**

(22) Date of filing: **02.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Stauder, Jürgen**
**35576 CESSON-SEVIGNE (FR)**

• **Guermoud, Hassane**
**35576 CESSON-SEVIGNE (FR)**
• **Blonde, Laurent**
**35576 CESSON-SEVIGNE (FR)**

(74) Representative: **Ruellan-Lemonnier, Brigitte**
**Technicolor**
**European Patent Operations**
**1-5 Rue Jeanne d'Arc**
**92443 Issy-les-Moulineaux Cedex (FR)**

(54) **Method of generating a final colour version of a source image from a first set of different intermediate colour versions**

(57)     This method comprises the following steps :
- displaying the different intermediate colour versions,
- from a visual comparison between displayed versions, selecting a second set,
- determining an intermediate colour transform able to transform an original version of said source image into each of said selected intermediate colour versions by a comparison between the original version of said source image with the selected intermediate colour version,
- building a final colour transform by combining each of the determined intermediate colour transforms,
- generating the final colour version by applying the built final colour transform to the original version of said source image.

Fig.1

EP 2 555 504 A1

**Description**

The invention relates to the sharing and the mixing of different colours versions of a same source image.

In consumer as well as in professional applications, there are various color transform tools for changing colors, also called color correction, color grading or color manipulation. This invention addresses the problem of communication of color changes that result from such operations. For example, several color editing persons dispose of an identical original version of a given source image. Each of those colour editing persons change colors in the original version of their source image resulting to an intermediate colour version of the same source image per person. The problem is: how can these color editing persons share their color changes with another, specific person and how can this specific person make use of the different color changes to define by himself a final color change resulting in a final colour version of this source image ?

The document EP1206124 disclosed a method of generating a final colour version of a source image from a first set of different intermediate colour versions of said source image that are each generated using a known intermediate colour transform applied to an original version of the source image with at least one colour processing parameter for said generation, comprising the steps of :

- rendering the different intermediate colour versions of said source image,
- from a visual comparison between displayed versions, selecting a second set of a plurality of intermediate colour versions within said first set,
- assigning a weight to each of said selected intermediate colour versions (see paragraph 23),
- building a final colour transform by combining each of the intermediate colour transforms corresponding to the selected intermediate colour versions of this second set with a weight equal to the weight assigned to the selected intermediate colour version corresponding to this intermediate colour transform,
- generating said final colour version by applying to the original version of the source image a final colour transform.

The problem of sharing and mixing colour changes is more difficult when the colour transform tool and associated parameters that have been used by the different editing persons are not available. For example, the final colour editing persons use different tool than the other editing persons. Then, colour transforms and parameters cannot be exchanged. Often, such tools allow outputting changed image content but does not allow to output metadata information about the nature of the color changes. If tools output such metadata, it may not be readable by another tool.

An object of the invention is to solve the aforementioned problem by proposing to add a step to the above mentioned method, wherein each colour transform corresponding to a selected intermediate colour version is derived from a comparison between this selected intermediate colour version with the original version of the source image.

The subject of the invention is then a method of generating a final colour version of a source image from a first set of different intermediate colour versions of said source image, comprising the steps of :

- displaying the different intermediate colour versions of said first set,
- from a visual comparison between displayed versions, selecting a second set of these intermediate colour versions within said first set,
- determining an intermediate colour transform able to transform an original version of said source image into each of said selected intermediate colour versions by a comparison between the original version of said source image with the selected intermediate colour version,
- building a final colour transform by combining each of the determined intermediate colour transforms,
- generating the final colour version by applying the built final colour transform to the original version of said source image.

Preferably, this method comprises also the following steps :

- assigning a weight to each of said selected intermediate colour versions of second set,
- combining each of the determined intermediate colour transforms with a weight equal to the weight assigned to the selected intermediate colour version corresponding to said determined intermediate colour transform.

The intermediate images derives from the same source image through different colour processing. For instance, different users receive the same source image and decide to use their own colour processing tools to transform according to their own settings the same source image into different intermediate images. After such a colour processing, all intermediate images may have only in common the same geometrical features.

According to a first variant, said final color transform is built from a linear combination of the determined intermediate colour transforms.

According to a second variant, said final color transform Tr_F' is built from a non-linear combination of the determined intermediate colour transforms based on dominating color aspects.

Preferably, the method comprises the step of generating said different intermediate colour versions at different locations by using different colour processing tools.

Preferably, in this method, said final colour transform determination comprises the step of dividing the color gamut of the source image into original tetrahedrons and the step of assigning a modified tetrahedron to each original tetrahedron, and said application of said built final colour transform to the original version of said source image to generate said final version is performed according to the following steps :

a) For each pixel of the original version of the source image having a given pixel color, identify an original tetrahedron that contains this pixel color and determine the color coordinates of the vertices of this original tetrahedron $XYZ_0$, $XYZ_1$, $XYZ_2$, $XYZ_3$ ;

b) Identify the corresponding modified tetrahedron by the color coordinates of its vertices $RGB_0$, $RGB_1$, $RGB_2$, $RGB_3$ ;

c) Calculate a determinant "det" for the original tetrahedron according to:

$$\det = \begin{vmatrix} a_{XYZ} & b_{XYZ} & c_{XYZ} \\ a_{XYZ}' & b_{XYZ}' & c_{XYZ}' \\ a_{XYZ}'' & b_{XYZ}'' & c_{XYZ}'' \end{vmatrix}$$

with

$$a_{XYZ} = X_1 - X_0, \quad a_{XYZ}' = Y_1 - Y_0, \quad a_{XYZ}'' = Z_1 - Z_0$$

$$b_{XYZ} = X_2 - X_0, \quad b_{XYZ}' = Y_2 - Y_0, \quad b_{XYZ}'' = Z_2 - Z_0$$

$$c_{XYZ} = X_3 - X_0, \quad c_{XYZ}' = Y_3 - Y_0, \quad c_{XYZ}'' = Z_3 - Z_0$$

d) Then, calculate three coefficients according to :

$$u_s = \frac{\begin{vmatrix} d_{XYZ} & b_{XYZ} & c_{XYZ} \\ d_{XYZ}' & b_{XYZ}' & c_{XYZ}' \\ d_{XYZ}'' & b_{XYZ}'' & c_{XYZ}'' \end{vmatrix}}{\det},$$

$$v_s = \frac{\begin{vmatrix} a_{XYZ} & d_{XYZ} & c_{XYZ} \\ a_{XYZ}' & d_{XYZ}' & c_{XYZ}' \\ a_{XYZ}'' & d_{XYZ}'' & c_{XYZ}'' \end{vmatrix}}{\det},$$

$$w_s = \frac{\begin{vmatrix} a_{XYZ} & b_{XYZ} & d_{XYZ} \\ a_{XYZ}' & b_{XYZ}' & d_{XYZ}' \\ a_{XYZ}'' & b_{XYZ}'' & d_{XYZ}'' \end{vmatrix}}{\det}$$

with

$$d_{XYZ} = X_s - X_0, \quad d_{XYZ}' = Y_s - Y_0, \quad d_{XYZ}'' = Z_s - Z_0$$

e) Calculate the modified pixel color $RGB_s$ of the final version according to :

$$R_s = a_{RGB}u_s + b_{RGB}v_s + c_{RGB}w_s + R_0$$

$$G_s = a_{RGB}'u_s + b_{RGB}'v_s + c_{RGB}'w_s + G_0 \quad B_s = a_{RGB}''u_s + b_{RGB}''v_s + c_{RGB}''w_s + B_0$$

with:

$$a_{RGB} = R_1 - R_0, \quad a_{RGB}' = G_1 - G_0, \quad a_{RGB}'' = B_1 - B_0$$

$$b_{RGB} = R_2 - R_0, \quad b_{RGB}' = G_2 - G_0, \quad b_{RGB}'' = B_2 - B_0$$

$$c_{RGB} = R_3 - R_0, \quad c_{RGB}' = G_3 - G_0, \quad c_{RGB}'' = B_3 - B_0$$

The subject of the invention is also a method of generating a final colour version of a source video content comprising a succession of images, comprising the steps of selecting an image in an original version of said source video content considered as an original version of a source image, generating a first set of different intermediate colour versions of said selected source image, generating a final colour version of said source image from said first set of different intermediate colour versions of said source image according to the method above, and generating said final colour version of said source video content by applying said built final colour transform to all successive images of said source video content.

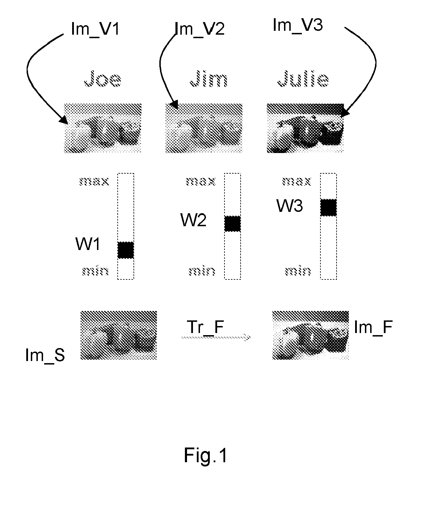

The invention will be more clearly understood on reading the description which follows, given by way of non-limiting example and with reference to the appended figures in which figure 1 illustrates an example of a preferred embodiment of the method according to the invention.

The functions of the various elements shown in this figure may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

The following example illustrates a preferred embodiment of a method according to the invention in reference to figure 1.

In this example, the method according to the invention is implemented for personal users of internet. Three friends, named Joe, Jim and Julie, use a web-based application for sharing color changes. Each friend is watching the same original version of a color source video content VC_S chosen, for instance, from a Video on Demand catalogue. One friend selects an image in this source video content VC_S and share this image with his friends by Internet, this image being considered an original version of a source image. Preferably, this image is selected in a manner known per se as representative of the source video content VC_S. This selected image can also correspond the first frame of the source video content VC_S. Each friend then applies a color change according to his personal taste to the shared original version of this selected source image Im_S and then generates his own intermediate colour version Im_V1, Im_V2, Im_V3 of the same source image Im_S. Each friend shares though the Internet the three intermediate colour versions Im_V1 , Im_V2, Im_V3 with the other friends.

Then, on his own colour display device, each friend displays the original version of the source image Im_S with the three different intermediate colour versions Im_V1, Im_V2, Im_V3 of the same source image.

From a visual comparison between the different versions displayed on his own colour display device, each friend selects two or three of the three intermediate colour versions Im_V1, Im_V2, Im_V3, and using scroll bars as illustrated on figure 1, chooses a weight W1, W2, W3 for each of the selected intermediate colour versions. Here, all intermediate colour versions are selected, but only a portion but a plurality of these intermediate colour versions can be selected without departing from the invention. As described above, an intermediate colour transform Tr_V1, Tr_V2, Tr_V3 corresponding to each of the selected intermediate colour versions Im- V1, Im_V2, Im_V3 is determined from a comparison between this selected intermediate colour version with the original version of the source image Im_S. Using the assigned weights W1, W2, W3, a related, interpolated, weighted final color transform Tr_F is calculated and applied to the original version of the source image Im_S to get the final colour version Im_F. Then, the final color transform Tr_F is applied to the entire video content to get a final version of this video content.

The determination of an intermediate colour transform from an original version of a source image Im_S and an intermediate colour version Im_Vx is done for example by the following steps:

a) Building pairs of corresponding colors from the original version of the source image Im_S and from the intermediate colour version Im_Vx, each pair consisting of an original color $XYZ_s$ and a modified color $RGB_s$;
b) Building an original tetrahedralization of the original colors of the source image in color space and a corresponding modified tetrahedralization of the modified colors of the intermediate colour version Im_Vx.

Each intermediate colour transform Tr_V1, Tr_V2, Tr_V3 corresponding to a selected intermediate colour version is then determined by such a comparison between this selected intermediate colour version Im_V1, Im_V2, Im_V3 with the original version of the same source image Im_S, this comparison being done by the building of pairs of corresponding colors as mentioned above.

At the end of the process, the generation of the final version Im_F by the application of the final color transform to the original version of the source image Im_S is done for example by the following steps:

a) For each pixel of the original version of the source image Im_S having a given pixel color, identify the original tetrahedron that contains this pixel color, the color coordinates of the vertices of the original tetrahedron being $XYZ_0$ , $XYZ_1$ , $XYZ_2$ , $XYZ_3$ ;
b) Identify the corresponding modified tetrahedron by the color coordinates of its vertices $RGB_0$ , $RGB_1$ , $RGB_2$ , $RGB_3$ ;
c) Calculate a determinant "det" for the original tetrahedron according to:

$$\det = \begin{vmatrix} a_{XYZ} & b_{XYZ} & c_{XYZ} \\ a_{XYZ}' & b_{XYZ}' & c_{XYZ}' \\ a_{XYZ}'' & b_{XYZ}'' & c_{XYZ}'' \end{vmatrix}$$

with

$$a_{XYZ} = X_1 - X_0, \qquad a_{XYZ}' = Y_1 - Y_0, \qquad a_{XYZ}'' = Z_1 - Z_0$$

$$b_{XYZ} = X_2 - X_0, \qquad b_{XYZ}' = Y_2 - Y_0, \qquad b_{XYZ}'' = Z_2 - Z_0$$

$$c_{XYZ} = X_3 - X_0, \qquad c_{XYZ}' = Y_3 - Y_0, \qquad c_{XYZ}'' = Z_3 - Z_0$$

d) Then, calculate three coefficients according to

$$u_s = \frac{\begin{vmatrix} d_{XYZ} & b_{XYZ} & c_{XYZ} \\ d_{XYZ}' & b_{XYZ}' & c_{XYZ}' \\ d_{XYZ}'' & b_{XYZ}'' & c_{XYZ}'' \end{vmatrix}}{\det},$$

$$v_s = \frac{\begin{vmatrix} a_{XYZ} & d_{XYZ} & c_{XYZ} \\ a_{XYZ}' & d_{XYZ}' & c_{XYZ}' \\ a_{XYZ}'' & d_{XYZ}'' & c_{XYZ}'' \end{vmatrix}}{\det},$$

$$w_s = \frac{\begin{vmatrix} a_{XYZ} & b_{XYZ} & d_{XYZ} \\ a_{XYZ}' & b_{XYZ}' & d_{XYZ}' \\ a_{XYZ}'' & b_{XYZ}'' & d_{XYZ}'' \end{vmatrix}}{\det}$$

with

$$d_{XYZ} = X_s - X_0, \quad d_{XYZ}' = Y_s - Y_0, \quad d_{XYZ}'' = Z_s - Z_0$$

e) Calculate the modified pixel color $RGB_s$ of the final version lm_F according to :

$$R_s = a_{RGB} u_s + b_{RGB} v_s + c_{RGB} w_s + R_0$$

$$G_s = a_{RGB}' u_s + b_{RGB}' v_s + c_{RGB}' w_s + G_0 \quad B_s = a_{RGB}'' u_s + b_{RGB}'' v_s + c_{RGB}'' w_s + B_0$$

with:

$$a_{RGB} = R_1 - R_0, \qquad a_{RGB}' = G_1 - G_0, \qquad a_{RGB}'' = B_1 - B_0$$

$$b_{RGB} = R_2 - R_0, \quad b_{RGB}' = G_2 - G_0, \quad b_{RGB}'' = B_2 - B_0$$

$$c_{RGB} = R_3 - R_0, \quad c_{RGB}' = G_3 - G_0, \quad c_{RGB}'' = B_3 - B_0$$

A simple interpolation rule may not be satisfying for the proposed interactive application as described above between different friends. See for instance the problem that may rise between these friends if the building of the final colour transform is simply a linear combination of the intermediate color transforms:

● Joe proposes an intermediate colour version Im_VI showing a strongly desaturated and slightly bluish version.
● Jim proposes an intermediate colour version Im_V2 showing a strong yellow cast and slight saturation changes.

When the user now chooses between Joe's and Jim's proposal using a weighting slider, he probably wants:

● When choosing Joe's version, the user want to select desaturation
● When choosing Jim's version, the user wants to choose the yellow cast.

The user probably does not want:

● To mix bluish and yellow cast (becoming violet)
● To mix desaturation and saturation (resulting in no significant change)

According to an advantageous variation of the invention which is intended to solve this problem, the final color transform Tr_F' is now built from dominating color aspects and not, in a linear manner as above, from all color coordinates.
Example:

● In Joe's proposal, the desaturation is the strongest aspect of color change. When the user uses Joe's proposal for calculating the color change, the color change will include a change of saturation.
● In Jim's proposal, the yellow cast is the strongest aspect of color change. When the user uses Jim's proposal for calculating the color change, the color change will include a change of hue.

Although the illustrative embodiments have been described herein with reference to a given example with a variant, it is to be understood that the invention is not limited to this precise example and variant, and that various changes and modifications may be effected therein by one of ordinary skill in the pertinent art without departing from the invention. All such changes and modifications are intended to be included within the scope of the appended claims.

**Claims**

**1.** Method of generating a final colour version (Im_F) of a source image (Im_S) from a first set of different intermediate colour versions (Im_V1, Im_V2, Im_V3) of said source image, comprising the steps of :

- displaying the different intermediate colour versions (Im_V1, Im_V2, Im_V3) of said first set,
- from a visual comparison between displayed versions, selecting a second set of these intermediate colour versions (Im_V1, Im_V2, Im_V3) within said first set,
- assigning a weight (W1, W2, W3) to each of said selected intermediate colour versions (Im_V1, Im_V2, Im_V3),
- an intermediate colour transform (Tr_V1, Tr_V2, Tr_V3) able to transform an original version of said source image into each of said selected intermediate colour versions being determined, building a final colour transform (Tr_F) by combining each of the determined intermediate colour transforms (Tr_V1, Tr_V2, Tr_V3) with a weight (W1, W2, W3) equal to the weight assigned to the selected intermediate colour version corresponding to said determined intermediate colour transform,
- generating said final colour version (Im_F) by applying said built final colour transform (Tr_F) to the original version of said source image,

**characterized in that** each intermediate colour transform (Tr_V1, Tr_V2, Tr_V3) corresponding to a selected intermediate colour version is determined by a comparison between said selected intermediate colour version (Im_V1, lm_V2, lm_V3) with the original version of said source image (Im_S).

**2.** Method according to claim 1 **characterized in that** said final color transform Tr_F' is built from a linear combination of the determined intermediate colour transforms (Tr_V1, Tr_V2, Tr_V3).

**3.** Method according to claim 1 **characterized in that** said final color transform Tr_F' is built from a non-linear combination of the determined intermediate colour transforms (Tr_V1, Tr_V2, Tr_V3) based on dominating color aspects.

**4.** Method according to any one of the preceding claims comprising the step of generating said different intermediate colour versions (Im_V1, lm_V2, lm_V3) at different locations by using different colour processing tools.

**5.** Method according to any one of the preceding claims wherein said final colour transform (Tr_F) determination comprises the step of dividing the color gamut of the source image (Im_S) into original tetrahedrons and the step of assigning a modified tetrahedron to each original tetrahedron, and wherein said application of said built final colour transform (Tr_F) to the original version of said source image (Im_S) to generate said final version (Im_F) is performed according to the following steps :

d) For each pixel of the original version of the source image (Im_S) having a given pixel color, identify an original tetrahedron that contains this pixel color and determine the color coordinates of the vertices of this original tetrahedron $XYZ_0$ , $XYZ_1$ , $XYZ_2$ , $XYZ_3$ ;
e) Identify the corresponding modified tetrahedron by the color coordinates of its vertices $RGB_0$ , $RGB_1$ , $RGB_2$ , $RGB_3$ ;
f) Calculate a determinant "det" for the original tetrahedron according to:

$$\det = \begin{vmatrix} a_{XYZ} & b_{XYZ} & c_{XYZ} \\ a_{XYZ}' & b_{XYZ}' & c_{XYZ}' \\ a_{XYZ}'' & b_{XYZ}'' & c_{XYZ}'' \end{vmatrix}$$

with

$$a_{XYZ} = X_1 - X_0 , \quad a_{XYZ}' = Y_1 - Y_0 , \quad a_{XYZ}'' = Z_1 - Z_0$$

$$b_{XYZ} = X_2 - X_0 , \quad b_{XYZ}' = Y_2 - Y_0 , \quad b_{XYZ}'' = Z_2 - Z_0$$

$$c_{XYZ} = X_3 - X_0 , \quad c_{XYZ}' = Y_3 - Y_0 , \quad c_{XYZ}'' = Z_3 - Z_0$$

d) Then, calculate three coefficients according to :

$$u_s = \frac{\begin{vmatrix} d_{XYZ} & b_{XYZ} & c_{XYZ} \\ d_{XYZ}' & b_{XYZ}' & c_{XYZ}' \\ d_{XYZ}'' & b_{XYZ}'' & c_{XYZ}'' \end{vmatrix}}{\det},$$

$$v_s = \frac{\begin{vmatrix} a_{XYZ} & d_{XYZ} & c_{XYZ} \\ a_{XYZ}' & d_{XYZ}' & c_{XYZ}' \\ a_{XYZ}'' & d_{XYZ}'' & c_{XYZ}'' \end{vmatrix}}{\det},$$

$$w_s = \frac{\begin{vmatrix} a_{XYZ} & b_{XYZ} & d_{XYZ} \\ a_{XYZ}' & b_{XYZ}' & d_{XYZ}' \\ a_{XYZ}'' & b_{XYZ}'' & d_{XYZ}'' \end{vmatrix}}{\det}$$

with

$$d_{XYZ} = X_s - X_0, \quad d_{XYZ}' = Y_s - Y_0, \quad d_{XYZ}'' = Z_s - Z_0$$

e) Calculate the modified pixel color $RGB_s$ of the final version (Im_F) according to :

$$R_s = a_{RGB} u_s + b_{RGB} v_s + c_{RGB} w_s + R_0$$

$$G_s = a_{RGB}' u_s + b_{RGB}' v_s + c_{RGB}' w_s + G_0 \quad B_s = a_{RGB}'' u_s + b_{RGB}'' v_s + c_{RGB}'' w_s + B_0$$

with:

$$a_{RGB} = R_1 - R_0, \quad a_{RGB}' = G_1 - G_0, \quad a_{RGB}'' = B_1 - B_0$$

$$b_{RGB} = R_2 - R_0, \quad b_{RGB}' = G_2 - G_0, \quad b_{RGB}'' = B_2 - B_0$$

$$c_{RGB} = R_3 - R_0, \quad c_{RGB}' = G_3 - G_0, \quad c_{RGB}'' = B_3 - B_0$$

**6.** Method of generating a final colour version (VC_F) of a source video content (VC_S) comprising a succession of images, comprising the steps of selecting an image (lm_S) in an original version of said source video content (VC_S) considered as an original version of a source image, generating a first set of different intermediate colour versions (Im_V1, lm_V2, lm_V3) of said selected source image (lm_S), generating a final colour version (lm_F) of said source image (lm_S) from said first set of different intermediate colour versions (Im_V1, lm_V2, lm_V3) of said source image according to a method of any one of claims 1 to 5, and generating said final colour version (VC_F) of said source video content (VC_S) by applying said built final colour transform (Tr_F) to all successive images of said source video content (VC_S).

Fig.1

Europäisches
Patentamt

European
Patent Office

Office européen
des brevets

# EUROPEAN SEARCH REPORT

Application Number

EP 11 30 6007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/051584 A1 (SHIMIZU MASAYOSHI [JP] ET AL) 2 May 2002 (2002-05-02) <br> * paragraph [0042] - paragraph [0046] * <br> * paragraphs [0055], [0056] * <br> * paragraph [0076] - paragraph [0099] * <br> ----- | 1-3 | INV. <br> H04N1/60 |
| Y | US 5 930 009 A (SATO TSUNEO [JP] ET AL) 27 July 1999 (1999-07-27) <br> * abstract; figures 8,9 * <br> * column 10 - column 11 * <br> ----- | 1-3 | |
| A | US 5 495 539 A (SIEVERDING DAVID L [US]) 27 February 1996 (1996-02-27) <br> * abstract; figures 3,4 * <br> * column 8 * <br> ----- | 1 | |
| A | US 2008/174608 A1 (MAHY MARC [BE] ET AL) 24 July 2008 (2008-07-24) <br> * abstract; figures 2-4 * <br> ----- | 5 | |
| A | EP 1 881 424 A2 (MICROSOFT CORP [US]) 23 January 2008 (2008-01-23) <br> * abstract; figures 2-7 * <br> * paragraphs [0005], [0016] * <br> ----- | 1 | TECHNICAL FIELDS SEARCHED (IPC) <br><br> H04N |
| A | US 2001/028738 A1 (PETTIGREW DANIEL [CA] ET AL) 11 October 2001 (2001-10-11) <br> * the whole document * <br> ----- | 1,5 | |
| A | KASSON J M ET AL: "PERFORMING COLOR SPACE CONVERSIONS WITH THREE-DIMENSIONAL LINEAR INTERPOLATION", <br> JOURNAL OF ELECTRONIC IMAGING, SPIE / IS & T, <br> vol. 4, no. 3, 1 July 1995 (1995-07-01), <br> pages 226-249, XP000517861, <br> ISSN: 1017-9909, DOI: 10.1117/12.208656 <br> * the whole document * <br> ----- <br> -/-- | 5 | |

The present search report has been drawn up for all claims

| Place of search | Date of completion of the search | Examiner |
|---|---|---|
| Berlin | 12 October 2011 | Kassow, Harald |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 11 30 6007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/024824 A1 (HEWLETT PACKARD DEVELOPMENT CO [US]; WU REN [US]; WANG YU-WEI [US]) 4 March 2010 (2010-03-04) * the whole document * ----- | 1 | |

TECHNICAL FIELDS
SEARCHED      (IPC)

The present search report has been drawn up for all claims

| Place of search | Date of completion of the search | Examiner |
|---|---|---|
| Berlin | 12 October 2011 | Kassow, Harald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 30 6007

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2011

| Patent document cited in search report | | Publication date | Patent family member(s) | | Publication date |
|---|---|---|---|---|---|
| US 2002051584 | A1 | 02-05-2002 | JP 2002112025 A | | 12-04-2002 |
| US 5930009 | A | 27-07-1999 | NONE | | |
| US 5495539 | A | 27-02-1996 | NONE | | |
| US 2008174608 | A1 | 24-07-2008 | AT 510407 T | | 15-06-2011 |
| | | | CN 101595720 A | | 02-12-2009 |
| | | | EP 2106656 A1 | | 07-10-2009 |
| | | | WO 2008090083 A1 | | 31-07-2008 |
| | | | ES 2363483 T3 | | 05-08-2011 |
| EP 1881424 | A2 | 23-01-2008 | NONE | | |
| US 2001028738 | A1 | 11-10-2001 | GB 2363021 A | | 05-12-2001 |
| WO 2010024824 | A1 | 04-03-2010 | CN 102138157 A | | 27-07-2011 |
| | | | EP 2321791 A1 | | 18-05-2011 |
| | | | US 2011158527 A1 | | 30-06-2011 |

EPO FORM P0459

For more details about this annex : see Official Journal of the European Patent Office, No. 12/82

**EP 2 555 504 A1**

### Patent documents cited in the description

- EP 1206124 A